# EUROPEAN PATENT SPECIFICATION

(11) **EP 1 378 135 B1**
(45) Date of publication and mention of the grant of the patent: **12.12.2012**
(21) Application number: 02706774.3
(22) Date of filing: 20.03.2002
(51) Int. Cl.: H04W 36/12

(54) **A HANDOVER METHOD IN A GPRS COMMUNICATION SYSTEM**
WEITERREICHUNGSVERFAHREN IN EINEM GPRS-KOMMUNIKATIONSSYSTEM
PROCEDE DE TRANSFERT DANS UN SYSTEME DE COMMUNICATION GPRS

(30) Priority: 12.04.2001 GB 0109371
(43) Date of publication of application: 07.01.2004
(73) Proprietor: Telefonaktiebolaget LM Ericsson (publ), 164 83 Stockholm (SE)
(72) Inventor: EDLUND, Peter, Hans, S-172 43 Tumba (SE)
(74) Representative: von Zmuda-Trzebiatowski, Margarethe
(86) International application number: PCT/EP2002/003137
(87) International publication number: WO 2002/085048

(56) References cited:
- EP-A1- 1 076 467
- EP-A1- 1 079 653
- WO-A2-00/32001
- WO-A2-00/79808

## Description

### TECHNICAL FIELD OF THE INVENTION

This invention relates to mobile communications networks, and in particular to an inter-SGSN handover method and to a SGSN and a GGSN implementing the method.

### BACKGROUND OF THE INVENTION

In a General Packet Radio Service (GPRS) mobile radio communication network, the network architecture includes at least one Gateway GPRS Support Node (GGSN), to which are connected a variety of Serving GPRS Support Nodes (SGSN), which are each responsible for mobile stations within their respective routeing areas.

The GPRS standard, GSM 03.60 version 7.4.0 describes at section 6.9.1.2.2 an Inter SGSN Routeing Area Update procedure, to be followed when a mobile station requests allocation to a new SGSN. This procedure may be initiated while a stream of data packets is being sent from the GGSN to the mobile station. Therefore, the procedure must be able to ensure that the data packets are correctly delivered to the mobile station.

Thus, according to the prior art procedure, when a mobile station wishes to change from a cell served by a first SGSN (the old SGSN) to a cell served by a second SGSN (the new SGSN), the mobile station sends a routeing area update request to the new SGSN, which contacts the old SGSN. At that time, the old SGSN starts a timer, and stops transmission of further Protocol Data Units (N-PDUs) to the mobile station.

The new SGSN informs the GGSN of the change of SGSN.

Meanwhile, the old SGSN sends to the new SGSN any N-PDUs that have been sent to the mobile station in acknowledged mode but have not yet been acknowledged, together with any N-PDUs that have been received from the GGSN but have not been converted into Logical Link Control (LLC) frames for transmission to the mobile station. The old SGSN also sends to the new SGSN any additional N-PDUs which are received from the GGSN before the expiry of the timer mentioned above.

The new SGSN must therefore receive these N-PDUs from the old SGSN, at the same time as it is deceiving N-PDUs from the GGSN. These N-PDUs must be re-ordered, so that the data can be sent to the mobile station in the correct order. This can be especially problematic in the case of two handovers which follow quickly on from each other. Moreover, it is difficult to set an appropriate value for the timer, which is long enough to ensure that all necessary N-PDUs are forwarded from the old SGSN to the new SGSN, but a the same time is short enough to ensure that the old SGSN does not remain blocked for longer than necessary.

WO 00/79808 discloses a method for handing over mobile stations in a GPRS network.

WO 00/32001 discloses a method for performing a handover from one network connection to another network connection, for avoiding the loss of error-critical data by suspending the connection during the handover.

### SUMMARY OF THE INVENTION

According to the present invention as defined in claim 1, there is provided an inter-SGSN handover method, which reduces the need for resequencing in the SGSN.

According to a preferred aspect of the present invention, this is achieved in that a message is sent to the GGSN, requesting that it stop transmission of N-PDUs. At that time, the old SGSN transfers to the new SGSN any N-PDUs which it needs to transmit to the mobile station. The GGSN resumes transmission of N-PDUs, this time to the new SGSN, when the handover is complete.

This reduces the requirement for the new SGSN to resequence the received N-PDUs.

The invention also comprises a SGSN and a GGSN as set forth in respective claims 13 and 19.

In one embodiment of the present invention, the signal to the GGSN, requesting it to stop transmission, is sent from the old SGSN when the old SGSN receives a message from.the new SGSN, informing it that the mobile station has moved to a cell served by the new SGSN.

According to a second embodiment of the present invention, the message to the GGSN, requesting it to stop transmission, is sent from the old SGSN on receipt by the old SGSN of a message from the serving base station, informing it that the mobile station has changed to a cell served by another SGSN.

According to a third embodiment of the present invention, the message to the GGSN, requesting it to stop transmission, is sent from the new SGSN on receipt of a Routeing Area Update.

### BRIEF DESCRIPTION OF DRAWINGS

Figure 1 is a schematic representation of a part of a mobile communications network in accordance with the present invention.
Figure 2 is a schematic representation illustrating the general principle behind the present invention.
Figure 3 shows the update procedure according to one embodiment of the present invention.
Figure 4 shows the update procedure according to a second embodiment of the present invention.
Figure 5 shows the update procedure according to a third embodiment of the present invention.
Figure 6 shows the update procedure according to a fourth embodiment of the present invention.

### DETAILED DESCRIPTION OF PREFERRED EMBODIMENTS

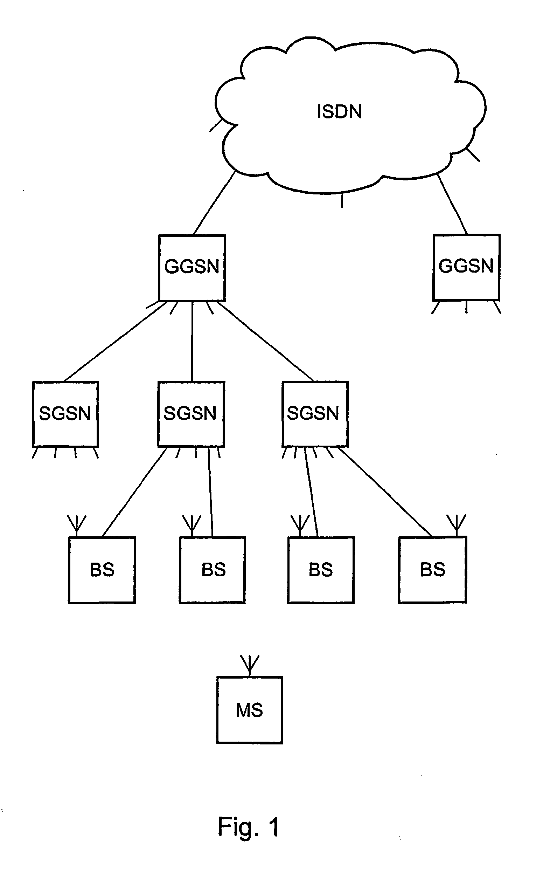

Figure 1 is a schematic diagram illustrating the relationship between the component parts of a General Packet Radio Service (GPRS) mobile radio communications network. It will be appreciated that Figure 1 shows only a small fraction of the components in a typical network. The network includes a plurality of Gateway GPRS Support Nodes (GGSNs) each of which is connected to a digital wired telecommunications network (ISDN). Each of the GGSNs is in communication with one or more Serving GPRS Support Nodes (SGSNs), each of which is in turn in communication with one or more base stations (BSs).

Each base station serves the mobile stations (MSs) in a specific geographic coverage area.

Communications between the mobile station and the respective base station take place over the air interface.

The Logical Link Control (LLC) transport protocol is used to transport all signalling and application data between the relevant SGSN and a mobile station.

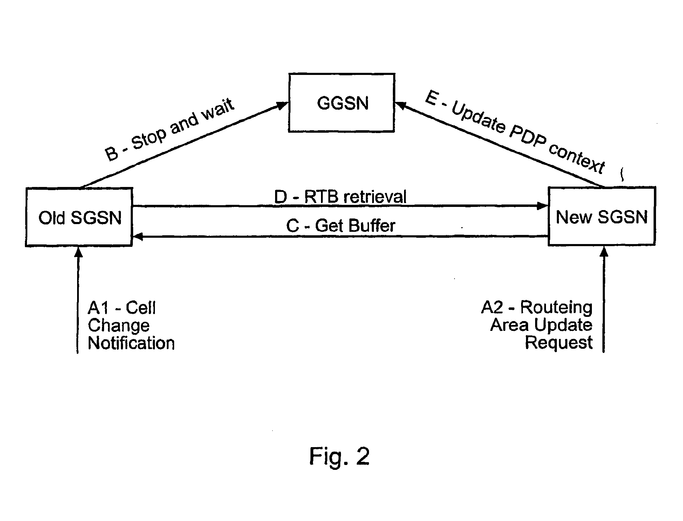

Figure 2 is a schematic illustration showing the principle of the present invention. Specifically, when a mobile station moves from a geographical area served by a first SGSN (the "old SGSN") to a geographical area served by a second SGSN (the "new SGSN"), a notification is sent, namely a Packet Cell Change Notification to the old SGSN (message A1 in Figure 2), and/or a Routeing Area Update Request to the new SGSN (message A2 in Figure 2).

From this time, the old SGSN sends no further data to the mobile station, but a message (message B) is sent to the GGSN, either from the old SGSN or the new SGSN instructing the GGSN to cease transmission of N-PDU data packets to the old SGSN.

There is then communication between the two SGSNs involved in the handover (messages C and D in Figure 2), as a result of which the data packets in the transmission buffer (TB) of the old SGSN, that is the data packets which have not yet been sent to the mobile station, and the data packets in the retransmission buffer (RTB) of the old SGSN, that is the data packets which have been senc to the mobile station but not yet acknowledged, are sent from the old SGSN to the new SGSN.

The buffered data packets which are transmitted to the new SGSN can then be transmitted or retransmitted as required.

When the handover is complete, the new SGSN sends a message (message E) to the GGSN, requesting it to update the PDP context. From then on, the GGSN can begin transmitting data packets for the mobile station to the new SGSN.

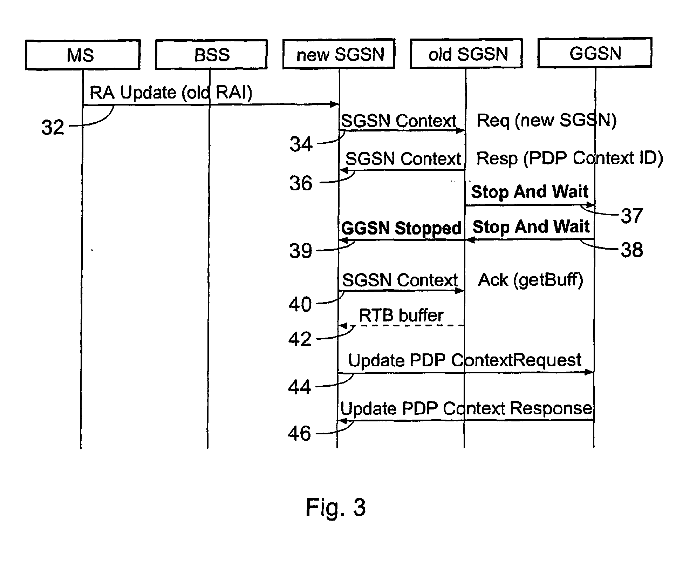

Figure 3 is a more detailed diagram, showing one possible implementation of a procedure operating on the principles illustrated in Figure 2. It will be appreciated that the procedure described herein is similar in some respects to that described in the GPRS standard, GSM 03.60 version 7.4.0 at section 6.9.1.2.2. It is assumed that messages in the illustrated procedure, which perform the same functions as messages contained in the prior art procedure, do not need to be described fully.

Thus, in step 32, when a mobile station in packet idle mode performs a cell reselection, and in the new cell determines that the new cell belongs to a new routing area, it sends a Routeing Area (RA) Update Request to the new SGSN, indicating the old Routeing Area Identity (RAI).

As in the prior art procedure, the new SGSN then sends at step 34 a SGSN Context Request message to the old SGSN, and the old SGSN sends at step 36 a SGSN Context Response message, which amongst other things contains a list of active Packet Data Protocol (PDP) contexts associated with the mobile station.

On receipt of the SGSN Context Response message, the new SGSN performs any required security functions (not shown in Figure 3) with the mobile station, and starts a timer, which runs for a preset time.

In accordance with the invention, in step 37, the old SGSN at this point sends a Stop And Wait message to the GGSN, requesting that it stop transmission of N-PDUs to it while awaiting handover to a new SGSN. The Stop And Wait message indicates the address of the new SGSN, the identity (P-IMSI) of the mobile station, the list of active contexts (Context ID) of the mobile station, and the GPRS Tunnelling Protocol (GTP) Tunnel Identifier (TID).

In step 38, the GGSN sends to the old SGSN a Stop And Wait Acknowledge message, indicating that no more N-PDUs will be sent to the old SGSN. This message also indicates the sequence number of the last N-PDU. Alternatively, or additionally, the last N-PDU sent from the GGSN to the old SGSN can indicate in the header information that it is the end of the transmission.

In step 39, the old SGSN sends a GGSN Stopped message to the new SGSN, confirming that the GGSN will send no more N-PDUs to the old SGSN.

In step 40, after completing the security functions with the mobile station, the new SGSN sends an SGSN Context Acknowledged message to the old SGSN, and this message also indicates that the new SGSN is now ready to receive buffered data. The SGSN Context Acknowledged message can be sent either in response to the GGSN Stopped message, or on expiry of the preset time since the starting of the timer mentioned above.

The old SGSN will have buffered data which has already been transmitted to the mobile station but has not been acknowledged, and data which has been received from the GGSN but has not yet been transmitted to the mobile station. The old SGSN is responsible for calculating the routing data and the N-PDU sequence numbering for all such data. In step 42, this buffered data from the transmission buffer and the retransmission buffer is sent via the GTP protocol on the Gn interface from the old SGSN to the new SGSN. The latest buffered N-PDU is preferably identified as such.

Assuming that the routing area update procedure can be completed, in step 44 the new SGSN sends an Update PDP Context Request message to the GGSN. The Update PDP Context Request message indicates that traffic to the new SGSN can begin (TrafOn), and also indicates the identity (P-IMSI) of the mobile station and the list of active contexts (Context ID) of the mobile station.

In response, in step 46, the GGSN sends an Update PDP Context Response message to the new SGSN. At that point, the GGSN can recommence transmitting N-PDUs for the mobile station, and begins sending them to the new SGSN.

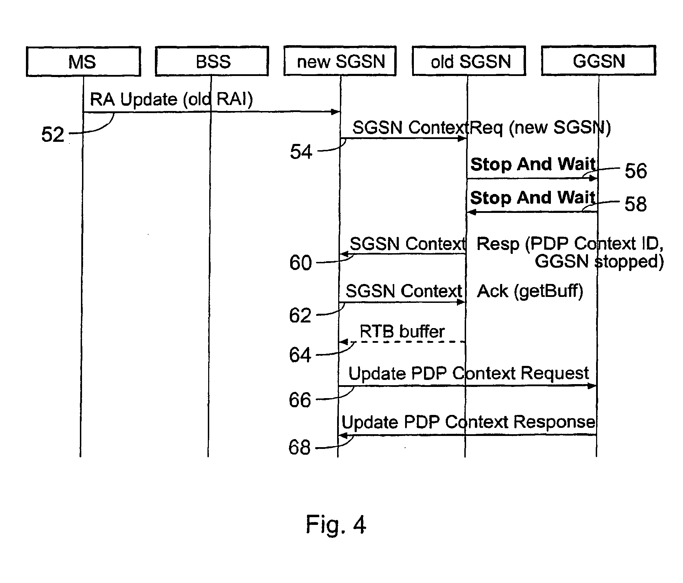

Figure 4 illustrates an alternative procedure in accordance with the invention. In step 52, when a mobile station in packet idle mode performs a cell reselection, and in the new cell determines that the new cell belongs to a new routing area, it sends a Routeing Area (RA) Update Request to the new SGSN, indicating the old Routeing Area Identity (RAI).

As in the prior art procedure, the new SGSN then sends at step 54 a SGSN Context Request message to the old SGSN.

In accordance with the invention, in step 56, the old SGSN at this point sends a Stop And Wait message to the GGSN, requesting that it stop transmission of N-PDUs to it while awaiting handover to a new SGSN. The Stop And Wait message indicates the address of the new SGSN, the identity (P-IMSI) of the mobile station, the list of active contexts (Context ID) of the mobile station, and the GPRS Tunnelling Protocol (GTP) Tunnel Identifier (TID).

In step 58, the GGSN sends to the old SGSN a Stop And Wait Acknowledge message, indicating that no more N-PDUs will be sent to the old SGSN. This message also indicates the sequence number of the last N-PDU. Alternatively, or additionally, the last N-PDU sent from the GGSN to the old SGSN can indicate in the header information that it is the end of the transmission.

On receipt of the Stop And Wait Acknowledge message, the old SGSN sends at step 60 a SGSN Context Response message, which amongst other things contains a list of active Packet Data Protocol (PDP) contexts associated with the mobile station. The SGSN Context Response message also confirms to the new SGSN that the GGSN is stopped, and will send no more N-PDUs to the old SGSN.

In step 62, after completing security functions with the mobile station, the new SGSN sends an SGSN Context Acknowledged message to the old SGSN, and this message also indicates that the new SGSN is now ready to receive buffered data.

The old SGSN will have buffered data which has already been transmitted to the mobile station but has not been acknowledged, and data which has been received from the GGSN but has not yet been transmitted to the mobile station. The old SGSN is responsible for calculating the routing data and the N-PDU sequence numbering for all such data. In step 64, this buffered data from the transmission buffer and the retransmission buffer is sent via the GTP protocol on the Gn interface from the old SGSN to the new SGSN. The latest buffered N-PDU is preferably identified as such.

Assuming that the routing area update procedure can be completed, in step 66 the new SGSN sends an Update PDP Context Request message to the GGSN. The Update PDP Context Request message indicates that traffic to the new SGSN can begin (TrafOn), and also indicates the identity (P-IMSI) of the mobile station and the list of active contexts (Context ID) of the mobile station.

In response, in step 68, the GGSN sends an Update PDP Context Response message to the new SGSN. At that point, the GGSN can recommence transmitting N-PDUs for the mobile station, and begins sending them to the new SGSN.

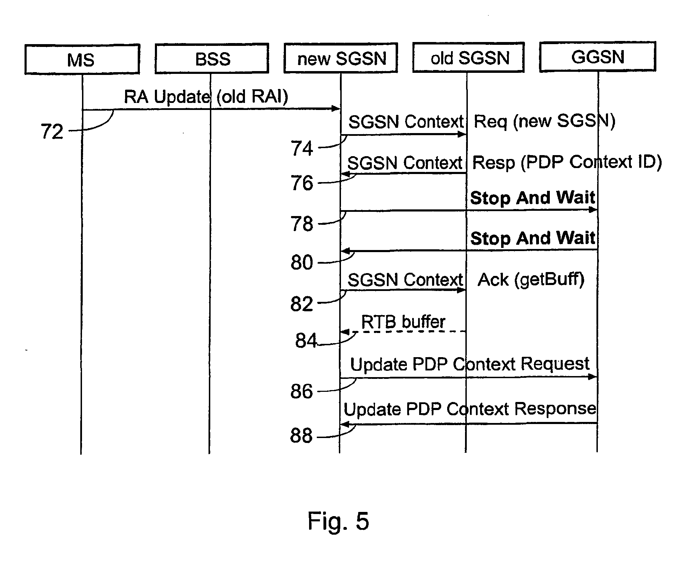

Figure 5 shows a further alternative procedure in accordance with the invention. In step 72, when a mobile station in packet idle mode performs a cell reselection, and in the new cell determines that the new cell belongs to a new routing area, it sends a Routeing Area (RA) Update Request to the new SGSN, indicating the old Routeing Area Identity (RAI).

As in the prior art procedure, the new SGSN then sends at step 74 a SGSN Context Request message to the old SGSN, and the old SGSN sends at step 76 a SGSN Context Response message, which amongst other things contains a list of active Packet Data Protocol (PDP) contexts associated with the mobile station.

On receipt of the SGSN Context Response message, at step 78, the new SGSN sends a Stop And Wait message to the GGSN, requesting that it stop transmission of N-PDUs to the old SGSN. The Stop And Wait message indicates the address of the new SGSN, the identity (P-IMSI) of the mobile station, the list of active contexts (Context ID) of the mobile station, and the GPRS Tunnelling Protocol (GTP) Tunnel Identifier (TID).

In step 80, the GGSN sends to the new SGSN a Stop And Wait Acknowledge message, indicating that no more N-PDUs will be sent to the old SGSN. This message also indicates the sequence number of the last N-PDU sent from the GGSN to the old SGSN.

In step 82, the new SGSN sends an SGSN Context Acknowledged message to the old SGSN, and this message also indicates that the new SGSN is now ready to receive buffered data.

The old SGSN will have buffered data which has already been transmitted to the mobile station but has not been acknowledged, and data which has been received from the GGSN but has not yet been transmitted to the mobile station. The old SGSN is responsible for calculating the routing data and the N-PDU sequence numbering for all such data. In step 84, this buffered data from the transmission buffer and the retransmission buffer is sent via the GTP protocol on the Gn interface from the old SGSN to the new SGSN. The latest buffered N-PDU is preferably identified as such.

Assuming that the routing area update procedure can be completed, in step 86 the new SGSN sends an Update PDP Context Request message to the GGSN. The Update PDP Context Request message indicates that traffic to the new SGSN can begin (TrafOn), and also indicates the identity (P-IMSI) of the mobile station and the list of active contexts (Context ID) of the mobile station.

In response, in step 88, the GGSN sends an Update PDP Context Response message to the new SGSN. At that point, the GGSN can recommence transmitting N-PDUs for the mobile station, and begins sending them to the new SGSN.

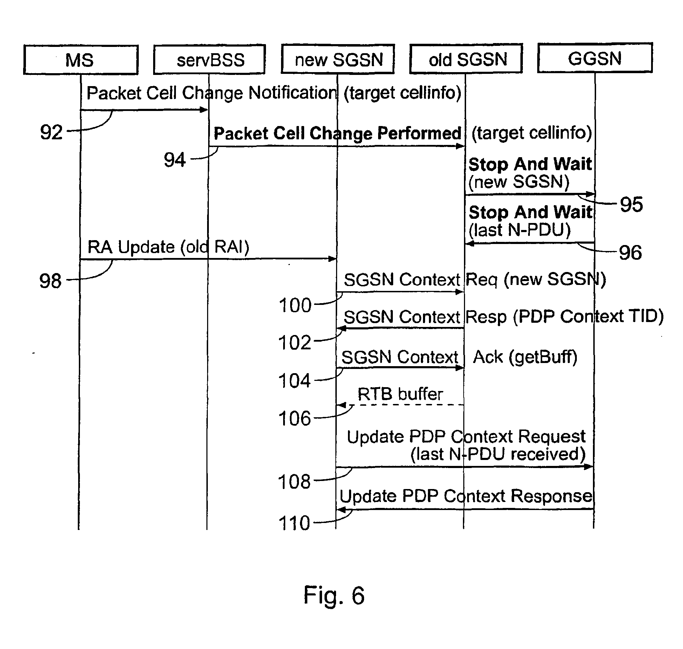

Figure 6 shows a further alternative procedure in accordance with the invention. In step 92, when a mobile station in packet idle mode performs a cell reselection, it sends a Packet Cell Change Notification message to its serving base station, indicating the identity of the target cell.

If the request is accepted by the network, the base station sends a Packet Cell Change Order (not shown) to the mobile station, with an indication of the target cell. If the target cell is served by a different SGSN, then, in parallel with the Packet Cell Change Order, the serving base station sends a Packet Cell Change Performed message, step 94, to the old SGSN, also with an indication of the target cell and the mobile station identity (IMSI).

In accordance with the invention, in step 95, the old SGSN at this point sends a Stop And Wait message to the GGSN, requesting that it stop transmission of N-PDUs to it while awaiting handover to a new SGSN. The Stop And Wait message indicates the address of the new SGSN, the identity (P-IMSI) of the mobile station, the list of active contexts (Context ID) of the mobile station, and the GPRS Tunnelling Protocol (GTP) Tunnel Identifier (TID).

In step 96, the GGSN sends to the old SGSN a Stop And Wait Acknowledge message, indicating that no more N-PDUs will be sent to the old SGSN. This message also indicates the sequence number of the last N-PDU. Alternatively, or additionally, the last N-PDU sent from the GGSN to the old SGSN can indicate in the header information that it is the end of the transmission.

In step 98 meanwhile, in parallel with the Stop And Wait messages, if the mobile station in the new cell determines that the new cell belongs to a new routing area, it sends a Routeing Area (RA) Update Request to the new SGSN, indicating the old Routeing Area Identity (RAI).

The new SGSN then sends at step 100 a SGSN Context Request message to the old SGSN, and the old SGSN sends at step 102 a SGSN Context Response message, which amongst other things contains a list of active Packet Data Protocol (PDP) contexts associated with the mobile station.

In step 104, the new SGSN sends an SGSN Context Acknowledged message to the old SGSN, and this message also indicates that the new SGSN is now ready to receive buffered data.

The old SGSN will have buffered data which has already been transmitted to the mobile station but has not been acknowledged, and data which has been received from the GGSN but has not yet been transmitted to the mobile station. The old SGSN is responsible for calculating the routing data and the N-PDU sequence numbering for all such data. In step 106, this buffered data from the transmission buffer and the retransmission buffer is sent via the GTP protocol on the Gn interface from the old SGSN to the new SGSN. The latest buffered N-PDU is preferably identified as such.

Assuming that the routing area update procedure can be completed, in step 108 the new SGSN sends an Update PDP Context Request message to the GGSN. The Update PDP Context Request message indicates that traffic to the new SGSN can begin (TrafOn), and also indicates the identity (P-IMSI) of the mobile station and the list of active contexts (Context ID) of the mobile station.

In response, in step 110, the GGSN sends an Update PDP Context Response message to the new SGSN. At that point, the GGSN can recommence transmitting N-PDUs for the mobile station, and begins sending them to the new SGSN.

The new SGSN is therefore able to send data to the mobile station with the minimum of delay, and with a minimum requirement for resequencing of data in the new SGSN.

There are therefore described procedures which allow an inter-SGSN to be performed, while minimising the need for re-sequencing of data in the new SGSN, and hence improving the performance for the mobile station.

It will be appreciated that, although the invention has been described with reference to its use in a GPRS network, it is not limited to such application.

## Claims

1. An inter-SGSN handover method, for use in a GPRS network comprising at least one Gateway GPRS Support Node [GGSN] and a plurality of Serving GPRS Support Nodes [SGSNs] connected thereto, when a mobile station is to be handed over from a first SGSN to a second SGSN, the method comprising:
sending a Stop and Wait message to the GGSN (37, 56, 78, 95);
on receipt by the GGSN of the Stop and Wait message, suspending transmission of data to said mobile station and indicating last sent data
transmitting buffered data from the first SGSN to the second SGSN (42, 64, 84, 106);
transmitting the buffered data from the second SGSN to the mobile station; and
on completion of the inter-SGSN handover procedure, resuming transmission of data from the GGSN to the mobile station, via the second SGSN by requesting the GGSN to recommence to send data,

2. A method as claimed in claim 1, wherein the buffered data comprises data sent from the first SGSN to the mobile station but not yet acknowledged.

3. A method as claimed in claim 1 or 2, wherein the buffered data comprises data sent from the GGSN to the first SGSN but not yet sent to the mobile station.

4. A method as claimed in claim 1, wherein the Stop and W ait message is sent to the GGSN from the first SGSN (37, 56, 95).

5. A method as claimed in claim 4, wherein the Stop and Wait message is sent from the first SGSN to the GGSN (95) on receipt by the first SGSN of a message from the base station currently serving the mobile station (94).

6. A method as claimed in claim 5, wherein the Stop and Wait message is sent from the first SGSN to the GGSN (95) on receipt by the first SGSN of a Packet Cell Change Performed message from the base station currently serving the mobile station (94).

7. A method as claimed in claim 4, wherein the Stop and Wait message is sent from the first SGSN to the GGSN (37, 56) on receipt by the first SGSN of a message from the second SGSN (34, 54).

8. A method as claimed in claim 7, wherein the Stop and Wait message is sent from the first SGSN to the GGSN (37, 56) on receipt by the first SGSN of a SGSN Context Request message from the second SGSN (34, 54).

9. A method as claimed in claim 8, wherein the first SGSN sends a SGSN Context Response message to the second SGSN (36), and a separate message confirming that the GGSN has suspended transmission of data (39).

10. A method as claimed in claim 8, wherein the first SGSN sends a SGSN Context Response message to the second SGSN (60), including confirmation that the GGSN has suspended transmission of data.

11. A method as claimed in claim 1, wherein the Stop and Wait message is sent to the GGSN from the second SGSN (78).

12. A method as claimed in claim 11, wherein the Stop and Wait message is sent from the second SGSN to the GGSN after the second SGSN has sent a SGSN Context Request message to the first SGSN (74), and received a SGSN Context Response message from the first SGSN (76).

13. A Serving GPRS Support Node [SGSN], for use in a GPRS network comprising at least one Gateway GPRS Support Node [GGSN] and a plurality of SGSNs connected thereto,
wherein the SGSN, on receipt of a message indicating that a mobile station is to be handed over
therefrom to a second SGSN, is adapted to:
send a Stop and Wait message to the GGSN, requesting that it send no more data for said mobile station;
receiving from the GGSN an indication on last sent data; and
transmit buffered data to the second SGSN.

14. An SGSN as claimed in claim 13, wherein the buffered data comprises data sent from the SGSN to the mobile station but not yet acknowledged.

15. An SGSN as claimed in claim 13 or 14,
wherein the buffered data comprises data sent from the GGSN to the SGSN but not yet sent to the mobile station.

16. An SGSN as claimed in claim 13, wherein the SGSN is adapted to send the Stop and Wait message to the GGSN on receipt by the SGSN of a message from the base station currently serving the mobile station.

17. An SGSN as claimed in claim 13, wherein the SGSN is adapted to transmit the buffered data to the second SGSN on receipt of an SGSN Context Acknowledged message from said second SGSN.

18. An SGSN as claimed in claim 13, wherein the Stop and Wait message is sent from the SGSN to the GGSN on receipt by the SGSN of a message from the second SGSN.

19. A Gateway GPRS Support Node [GGSN], for use in a GPRS network comprising at least one GGSN and a plurality of Serving GPRS Support Nodes [SGSNs] connected thereto, wherein the GGSN is adapted:
on receipt of a Stop and Wait message from a first SGSN, to suspend transmission of data to a mobile station and to indicate last sent data; and
on completion of an inter-SGSN handover from the first SGSN to a second SGSN, to resume transmission of data to the mobile station, via the second SGSN, by receiving a request to recommence to send data.

20. A GGSN as claimed in claim 19, wherein the GGSN is adapted to resume transmission of data via the second SGSN, on receipt of an Update PDP Context Request therefrom.

## Patentansprüche

1. Verfahren zur Weiterschaltung zwischen SGSNs zur Verwendung in einem GPRS-Netzwerk, das mindestens einen Gateway-GPRS-Unterstützungsknoten [GGSN] und eine Mehrzahl von versorgenden GPRS-Unterstützungsknoten [SGSNs] damit verbunden umfasst, wenn eine Mobilstation von einem ersten SGSN zu einem zweiten SGSN weitergeschaltet werden soll, wobei das Verfahren umfasst:
Senden einer Anhalten- und Warten-Nachricht an den GGSN (37, 56, 78, 95) ;
Unterbrechen der Übertragung von Daten an die Mobilstation und Anzeigen von letzten gesendeten Daten bei Empfang der Anhalten- und Warten-Nachricht durch den GGSN;
Übertragen von gepufferten Daten vom ersten SGSN an den zweiten SGSN (42, 64, 84, 106);
Übertragen der gepufferten Daten vom zweiten SGSN an die Mobilstation; und
Fortsetzen der Übertragung von Daten vom GGSN an die Mobilstation über den zweiten SGSN bei Abschluss des Weiterschaltvorgangs zwischen den SGNs durch Auffordern des GGSN, wieder mit dem Senden von Daten zu beginnen.

2. Verfahren nach Anspruch 1, wobei die gepufferten Daten Daten umfassen, die vom ersten SGSN an die Mobilstation gesendet, aber noch nicht bestätigt wurden.

3. Verfahren nach Anspruch 1 oder 2, wobei die gepufferten Daten Daten umfassen, die vom GGSN an den ersten SGSN gesendet, aber noch nicht an die Mobilstation gesendet wurden.

4. Verfahren nach Anspruch 1, wobei die Anhalten- und Warten-Nachricht vom ersten SGSN (37, 56, 95) an den GGSN gesendet wird.

5. Verfahren nach Anspruch 4, wobei die Anhalten- und Warten-Nachricht bei Empfang einer Nachricht von der Basisstation, welche die Mobilstation (94) gegenwärtig versorgt, durch den ersten SGSN vom ersten SGSN an den GGSN (95) gesendet wird.

6. Verfahren nach Anspruch 5, wobei die Anhalten- und Warten-Nachricht bei Empfang einer Paketzelländerungdurchgeführt-Nachricht von der Basisstation, welche die Mobilstation (94) gegenwärtig versorgt, durch den ersten SGSN vom ersten SGSN an den GGSN (95) gesendet wird.

7. Verfahren nach Anspruch 4, wobei die Anhalten- und Warten-Nachricht bei Empfang einer Nachricht vom zweiten SGSN (34, 54) durch den ersten SGSN vom ersten SGSN an den GGSN (37, 56) gesendet wird.

8. Verfahren nach Anspruch 7, wobei die Anhalten- und Warten-Nachricht bei Empfang einer SGSN-Kontextanforderungsnachricht vom zweiten SGSN (34, 54) durch den ersten SGSN vom ersten SGSN an den GGSN (37, 56) gesendet wird.

9. Verfahren nach Anspruch 8, wobei der erste SGSN eine SGSN-Kontextantwortnachricht und eine separate Nachricht, die bestätigt, dass der GGSN die Übertragung von Daten (39) unterbrochen hat, an den zweiten SGSN (36) sendet.

10. Verfahren nach Anspruch 8, wobei der erste SGSN eine SGSN-Kontextantwortnachricht an den zweiten SGSN (60) sendet, die eine Bestätigung enthält, dass der GGSN die Übertragung von Daten unterbrochen hat.

11. Verfahren nach Anspruch 1, wobei die Anhalten- und Warten-Nachricht vom zweiten SGSN (78) an den GGSN gesendet wird.

12. Verfahren nach Anspruch 11, wobei die Anhalten- und Warten-Nachricht vom zweiten SGSN an den GGSN gesendet wird, nachdem der zweite SGSN eine SGSN-Kontextanforderungsnachricht an den ersten SGSN (74) gesendet und eine SGSN-Kontextantwortnachricht vom ersten SGSN (76) empfangen hat.

13. Versorgender GPRS-Unterstützungsknoten [SGSN] zur Verwendung in einem GPRS-Netzwerk, das mindestens einen Gateway GPRS-Unterstützungsknoten [GGSN] und eine Mehrzahl von SGSNs damit verbunden umfasst,
wobei der SGSN so ausgelegt ist, dass er bei Empfang einer Nachricht, die anzeigt, dass eine Mobilstation davon zu einem zweiten SGSN weitergeschaltet werden soll:
eine Anhalten- und Warten-Nachricht an den GGSN sendet, die ihn auffordert, keine Daten mehr für die Mobilstation zu senden;
eine Anzeige über letzte gesendete Daten vom GGSN empfängt;
gepufferte Daten an den zweiten SGSN überträgt.

14. SGSN nach Anspruch 13, wobei die gepufferten Daten Daten umfassen, die vom SGSN an die Mobilstation gesendet, aber noch nicht bestätigt wurden.

15. SGSN nach Anspruch 13 oder 14, wobei die gepufferten Daten Daten umfassen, die vom GGSN an den SGSN gesendet, aber noch nicht an die Mobilstation gesendet wurden.

16. SGSN nach Anspruch 13, wobei der SGSN so ausgelegt ist, dass er die Anhalten- und Warten-Nachricht bei Empfang einer Nachricht durch den SGSN von der Basisstation, welche die Mobilstation gegenwärtig versorgt, an den GGSN sendet.

17. SGSN nach Anspruch 13, wobei der SGSN so ausgelegt ist, dass er die gepufferten Daten bei Empfang einer SGSN-Kontextbestätigungsnachricht vom zweiten SGSN an den zweiten SGSN überträgt.

18. SGSN nach Anspruch 13, wobei die Anhalten- und Warten-Nachricht bei Empfang einer Nachricht vom zweiten SGSN (34, 54) durch den SGSN vom SGSN an den GGSN gesendet wird.

19. Gateway-GPRS-Unterstützungsknoten [GGSN] zur Verwendung in einem GPRS-Netzwerk, das mindestens einen GGSN und eine Mehrzahl von versorgenden GPRS-Unterstützungsknoten [SGSNs] damit verbunden umfasst, wobei der GGSN ausgelegt ist zum:
Unterbrechen der Übertragung von Daten an eine Mobilstation und Anzeigen von letzten gesendeten Daten bei Empfang einer Anhalten- und Warten-Nachricht von einem ersten SGSN;
Fortsetzen der Übertragung von Daten an die Mobilstation über den zweiten SGSN bei Abschluss einer Weiterschaltung zwischen SGSNs vom ersten SGSN zum zweiten SGSN durch Empfangen einer Aufforderung, wieder mit dem Senden von Daten zu beginnen.

20. GGSN nach Anspruch 19, wobei der GGSN so ausgelegt ist, dass er die Übertragung von Daten über den zweiten SGSN bei Empfang einer PDP-Kontextaktualisieren-Anforderung davon fortsetzt.

## Revendications

1. Procédé de transfert intercellulaire inter-SGSN, à utiliser dans un réseau GPRS, comprenant au moins un noeud de support GPRS de passerelle (GGSN) et une pluralité de noeuds de support GPRS de desserte (SGSNs) connectés à celui-ci, quand une station mobile doit être transférée depuis un premier SGSN vers un second SGSN, le procédé comprenant de :
envoyer un message d'arrêt et d'attente au GGSN (37,56,78,95) ;
à la réception par le GGSN du message d'arrêt et d'attente, suspendre la transmission des données à ladite station mobile et indiquer les dernières données envoyées ;
transmettre les données mises en mémoire tampon du premier SGSN au second SGSN (42,64,84,106) ;
transmettre les données mises en mémoire tampon du second SGSN à la station mobile ; et
à la fin de la procédure de transfert intercellulaire inter-SGSN, reprendre la transmission des données du GGSN à la station mobile, via le second SGSN en demandant au GGSN de reprendre l'émission des données.

2. Procédé selon la revendication 1, dans lequel les données mises en mémoire tampon comprennent des données envoyées du premier SGSN à la station mobile mais donc la réception n'a pas encore été accusée.

3. Procédé selon les revendications 1 ou 2, dans lequel les données mises en mémoire tampon comprennent des données envoyées du GGSN au premier SGSN mais qui n'ont pas encore été envoyées à la station mobile.

4. Procédé selon la revendication 1, dans lequel le message d'arrêt et d'attente est envoyé au GGSN depuis le premier SGSN (37,56,95).

5. Procédé selon la revendication 4, dans lequel le message d'arrêt et d'attente est envoyé du premier SGSN au GGSN (95) à la réception par le premier SGSN d'un message provenant de la station de base desservant actuellement la station mobile (94).

6. Procédé selon la revendication 5, dans lequel le message d'arrêt et d'attente est envoyé du premier SGSN au GGSB (95) à la réception par le premier SGSN d'un message Changement de cellule de paquet effectué depuis la station de base desservant actuellement la station mobile (94).

7. Procédé selon la revendication 4, dans lequel le message d'arrêt et d'attente est envoyé du premier SGSN au GGSN (37,56) à la réception par le premier SGSN d'un message provenant du second SGSN (34, 45).

8. Procédé selon la revendication 7, dans lequel le message d'arrêt et d'attente est envoyé du premier SGSN au GGSN (37,56) à la réception par le premier SGSN d'un message de demande de contexte SGSN provenant du second SGSN (34,54).

9. Procédé selon la revendication 8, dans lequel le premier SGSN envoie un message de réponse de contexte SGSN au second SGSN (36), et un message séparé confirmant que le GGSN a suspendu la transmission de données (39).

10. Procédé selon la revendication 8, dans lequel le premier SGSN envoie un message de réponse de contexte SGSN au second SGSN (60), incluant une confirmation que le GGSN a suspendu la transmission de données.

11. Procédé selon la revendication 1, dans lequel le message d'arrêt et d'attente est envoyé au GGSN depuis le second SGSN (78).

12. Procédé selon la revendication 11, dans lequel le message d'arrêt et d'attente est envoyé du second SGSN au GGSN après que le second SGSN a envoyé un message de demande de contexte SGSN au premier SGSN (74), et reçu un message de réponse de contexte SGSN depuis le first SGSN (76).

13. Noeud de support GPRS de desserte (SGSN), à utiliser dans un réseau GPRS comprenant au moins un noeud de support GPRS de passerelle (GGSN) et une pluralité de SGSNs connectés à celui-ci,
dans lequel le SGSN, à la réception d'un message indiquant qu'une station mobile doit être transférée depuis celui-ci vers un second SGSN, est adapté pour :
envoyer un message d'arrêt et d'attente au GGSN, demandant qu'il n'envoie pas plus de données pour ladite station mobile ;
recevoir depuis le GGSN une indication relatives aux dernières données envoyées ; et
transmettre les données mises en mémoire tampon au second SGSN.

14. SGSN selon la revendication 13, dans lequel les données mises en mémoire tamponcomprennent les données envoyées depuis le SGSN vers la station mobile mais dont la réception n'a pas encore été accusée.

15. SGSN selon les revendications 13 ou 14, dans lequel les données mises en mémoire tampon comprennent les données envoyées depuis le GGSN au SGSN mais qui n'ont pas encore été envoyées à la station mobile.

16. SGSN selon la revendication 13, dans lequel le SGSN est adapté pour envoyer le message d'arrêt et d'attente au GGSN à la réception par le SGSN d'un message provenant de la station de base desservant actuellement la station mobile.

17. SGSN selon la revendication 13, dans lequel le SGSN est adapté pour transmettre les données mises en mémoire tampon au second SGSN à la réception d'un message d'accusé de réception de contexte SGSN provenant dudit second SGSN.

18. SGSN selon la revendication 13, dans lequel le message d'arrêt et d'attente est envoyé du SGSN au GGSN à la réception par le SGSN d'un message provenant du second SGSN.

19. Noeud de support GPRS de passerelle (GGSN), à utiliser dans un réseau GPRS comprenant au moins un GGSN et une pluralité de noeuds de support GPRS de desserte (SGSNs) connectés à celui-ci, dans lequel le GGSN est adapté pour :
à la réception d'un message d'arrêt et d'attente provenant d'un premier SGSN, suspendre la transmission de données vers une station mobile et indiquer les dernières données envoyées ; et
à la fin d'un transfert intercellulaire inter-SGSN depuis le premier SGSN vers un second SGSN, reprendre la transmission des données vers la station mobile, via le second SGSN, en recevant une demande pour recommencer l'émission de données.

20. GGSN selon la revendication 19, dans lequel le GGSN est adapté pour reprendre la transmission de données via le second SGSN, à la réception d'une demande de mise à jour de contexte PDP provenant de celui-c
